# FASCICULE DE BREVET EUROPEEN

(11) **EP 1 074 117 B1**
(45) Date de publication et mention de la délivrance du brevet: **17.09.2008**
(21) Numéro de dépôt: 99915805.8
(22) Date de dépôt: 21.04.1999
(51) Int. Cl.: H04L 12/28, H04L 29/12

(54) **PROCEDE DE GESTION D'OBJETS DANS UN RESEAU DE COMMUNICATION ET DISPOSITIF DE MISE EN OEUVRE**
VERFAHREN UND VORRICHTUNG ZUR VERWALTUNG VON OBJEKTEN IN EINEM KOMMUNIKATIONSNETZ
METHOD FOR MANAGING OBJECTS IN A COMMUNICATION NETWORK AND IMPLEMENTING DEVICE

(30) Priorité: 23.04.1998 FR 9805110
(43) Date de publication de la demande: 07.02.2001
(73) Titulaire: THOMSON Licensing, 92100 Boulogne-Billancourt (FR)
(72) Inventeur: BICHOT, Guillaume, F-92648 Boulogne Cedex (FR); STRAUB, Gilles, F-92648 Boulogne Cedex (FR); COEZ, Fabienne, F-92648 Boulogne Cedex (FR); PIRAT, Patrick, F-92648 Boulogne Cedex (FR); BÜRKLIN, Helmut, F-92648 Boulogne Cedex (FR)
(74) Mandataire: Ruellan-Lemonnier, Brigitte
(86) Numéro de dépôt international: PCT/FR1999/000943
(87) Numéro de publication internationale: WO 1999/056435

(56) Documents cités:
- EP-A- 0 315 158
- EP-A- 0 618 708
- US-A- 5 384 697

## Description

L'invention concerne un procédé de gestion d'objets, notamment de modules logiciels, dans un réseau de communication pouvant être du type domotique. Elle concerne également des dispositifs aptes à être reliés à un tel réseau et comportant des moyens de mise en oeuvre du procédé.
L'invention s'applique notamment dans un réseau domotique adapté à l'interconnexion d'appareils audio et vidéo.

Dans un réseau d'appareils d'électronique grand public tels que des téléviseurs, décodeurs câbles ou satellites ou encore magnétoscopes, il est nécessaire de prévoir des moyens de communication entre les appareils, tout en prenant en compte des contraintes de complexité et de prix inhérents à des appareils fabriqués en grande série.

L'art antérieur connaît, par la demande de brevet européen EP-A-0 618 708 (IBM), un procédé pour localiser des ressources dans un réseau d'ordinateurs comportant des noeuds serveur cache.

Selon le type de réseau envisagé, il peut être nécessaire pour un appareil (encore appelé noeud dans ce qui suit) du réseau de connaître le chemin d'accès ou l'adresse d'un autre appareil. Cela est aussi le cas si l'on remplace la notion d'appareil par la notion d'objet, ou de module logiciel, un appareil pouvant contenir un grand nombre d'objets. Il peut s'agir d'applications téléchargées ou résidentes, d'interfaces utilisateurs particulières ou de modules de plus bas niveau. Chaque objet ou module d'un appareil peut chercher à communiquer avec un autre objet ou module du même appareil ou d'un autre appareil du réseau. Chaque objet est considéré comme une ressource à disposition d'autres objets.
Dans ce cas se pose le problème de l'obtention d'une ou de la liste dynamique de ressources disponibles dans le réseau.

Dans ce cadre, l'invention a pour objet un procédé de gestion distribuée d'un catalogue d'objets dans un réseau de communication comportant des appareils, ledit procédé comportant l'étape d'enregistrement des identificateurs et attributs d'objets locaux présents dans un appareil dans un registre local géré au niveau de cet appareil, ledit procédé étant caractérisé en ce qu'il comporte en outre les étapes :
- d'établissement, par un objet local, d'une requête de liste d'objets, ladite requête étant transmise à l'unique registre local de l'appareil hébergeant ledit objet local ;
- de propagation de ladite requête par ledit registre local à des registres distants ;
- de collecte des réponses à ladite requête par les registres distants et de la réponse du registre local ;
- de transmission des réponses collectées à l'objet local ayant établi la requête initiale.
- et en ce qu'un type de requête établie par un objet est une requête comportant au moins un critère de sélection portant sur un attribut d'objet.

Chaque noeud (ou appareil) ne stocke que les informations locales à ce noeud ou appareil: les informations ne sont pas dupliquées dans d'autres noeuds un objet ne s'enregistrant qu'auprès du registre local. Ainsi, les besoins en mémoire dans chaque appareil sont restreints.
La recherche des objets (modules logiciels) est répartie sur plusieurs appareils, chaque base de données étant interrogée au niveau local. Ainsi, les besoins de ressources de traitement de l'information au niveau local sont-elles également restreintes. De plus, seules les informations pertinentes, c'est-à-dire celles qui répondent aux critères de recherche, transitent sur le réseau: la bande passante est donc utilisée à bon escient.
La cohérence des données et maintenue de façon simple : il n'est pas nécessaire de mettre à jour, grâce à des traitements complexes, des bases de données distantes lorsqu'un changement est effectué dans une base de données locale.
Si un noeud disparaît, seules les informations liées à ce noeud sont perdues.
Aussi, les requêtes ne sont propagées dans le réseau que vers les autres registres. Il n'y a pas de transmission à TOUS les éléments du réseau, seulement à un sous-ensemble bien identifié, à savoir les registres. Cela limite également la bande passante requise.

Selon un mode de réalisation particulier, un registre local comporte pour chaque objet qui y est enregistré un identificateur de cet objet dans le réseau, cet identificateur étant unique pour le réseau, ainsi que des attributs dudit objet.

Selon un mode de réalisation particulier, ledit identificateur (SEID) comporte un identificateur de l'appareil dans lequel l'objet est présent, cet identificateur d'appareil étant unique dans le réseau, ainsi que d'un identificateur local unique à cet objet au niveau dudit appareil.

Selon un mode de réalisation particulier, un type de requête établie par un objet est une requête comportant au moins un critère de sélection portant sur un attribut d'objet.

Selon un mode de réalisation particulier, la fonction d'un objet est un attribut mémorisé par un registre local pour ledit objet.

Selon un mode de réalisation particulier, l'étape de propagation d'une requête comporte l'étape de détermination des appareils connectés au réseau comportant eux-mêmes un registre.

Un objet peut ainsi lancer une requête pour l'obtention d'une liste d'autres objets sans se préoccuper du fait de savoir si ces objets sont localisés dans le même noeud ou pas.

Selon un mode de réalisation particulier, l'étape de détermination des appareils comprend la détermination des types (FAV, IAV, BAV, LAV) des appareils présents dans le réseau, le type d'un appareil indiquant s'il héberge un registre ou s'il n'en héberge pas.

Dans un réseau de type HAVi, les appareils de type FAV et IAV comportent obligatoirement un registre, tandis que les appareils de type BAV et LAV n'en possèdent pas.

Selon une variante de réalisation, une requête n'est propagée qu'à un groupe déterminé de registres distants.

Lorsque l'on sait par exemple par avance que des modules logiciels comportant certains attributs ne sont présents que dans un type donné d'appareils, alors il est possible de limiter la propagation de requêtes à ce type d'appareil pour limiter le nombre de messages circulant sur le réseau.

Selon une variante de réalisation, un des types de requête pouvant être établies par un objet est une requête comportant des critères de sélection d'au moins deux listes d'objets, ainsi qu'au moins un opérateur de traitement desdites listes.

L'invention a aussi pour objet un appareil dans un réseau de communication comportant des moyens de mémorisation d'objets locaux, des moyens de mémorisation d'un registre local pour contenir un catalogue des objets locaux à l'appareil comportant des identificateurs et attributs desdits objets locaux, des moyens de connexion dudit appareil au réseau, ledit appareil étant caractérisé en ce qu'il comporte en outre :
- des moyens de propagation d'une requête de liste d'objets établie par un objet local vers les registres locaux d'autres appareils ;
- des moyens de collecte des réponses des registres des autres appareils et de la réponse du registre local et de transmission desdites réponses à l'objet ayant établi ladite requête;
- et en ce qu'un type de requête établie par un objet est une requête comportant au moins un critère de sélection portant sur un attribut d'objet.

Selon un mode de réalisation particulier, l'appareil comporte en outre des moyens de détermination des adresses d'appareils du réseau comportant des registres dits distants.

D'autres caractéristiques et avantages de l'invention apparaîtront à travers la description d'un exemple de réalisation particulier non limitatif, illustré par les figures jointes parmi lesquelles :
- la figure 1a représente schématiquement un réseau domotique comportant quatre appareils de type différent ;
- la figure 1b est un diagramme bloc d'un des appareils de la figure 1 ;
- la figure 2 est un schéma illustrant l'organisation logicielle de l'appareil de la figure 1b ;
- la figure 3 représente les états d'un module de registre d'un appareil du réseau ;
- la figure 4 représente le séquencement des messages lors d'une requête nécessitant une propagation vers un module de registre distant.

Selon le présent exemple de réalisation, le réseau domotique comporte quatre types d'appareils : les appareils audio-vidéo possédant les fonctionnalités complètes (FAV), les appareil audio-vidéo à fonction intermédiaire (IAV), les appareils audio-vidéo de base (BAV) et les appareils audio-vidéo hérités (LAV). Le bus de communication est de type IEEE1394, mais peut être d'un autre type. Le réseau admet un langage de commande commun, appelé langage HAVI.

Les appareils de type FAV possèdent les fonctionnalités les plus complètes de tous les appareils du réseau: un gestionnaire de communication, un module de registre, un gestionnaire de modules de contrôle d'appareil ainsi que des modules de contrôle d'appareil (appelés 'DCM' par la suite), ces derniers pouvant être téléchargés. Selon une variante, l'appareil comporte également un gestionnaire d'interface utilisateur. Les appareils FAV peuvent prendre le contrôle d'appareils moins sophistiqués, tels des appareils de type BAV et LAV par l'intermédiaire des modules de contrôle d'appareil. Un appareil FAV peut accéder à d'autres appareils de type FAV ou IAV pour accéder à des ressources dont il est dépourvu (par exemple un gestionnaire d'interface utilisateur).

Les appareils de type IAV possèdent les mêmes fonctionnalités qu'un FAV excepté la possibilité de télécharger des modules de contrôle d'appareils.

Les appareils de type BAV possèdent un langage de commande privé qui leur est propre, et qui n'est pas forcément celui utilisé par le reste des appareils. Ce type d'appareil est contrôlé par un appareil FAV par l'intermédiaire d'un module de contrôle (DCM) téléchargé à partir de l'appareil de type BAV lui-même et adapté à son contrôle. Par exemple, l'appareil de type BAV peut être une imprimante, dont le gestionnaire d'impression est téléchargé.

Les appareils de type LAV sont des appareils connectés au bus ou à des appareils de type IAV ou FAV par l'intermédiaire de connexions spécifiques. Les appareils de type LAV sont contrôlés par des modules de contrôle (DCM) spécifiques qui ne proviennent pas de l'appareil lui-même et possèdent leur propre langage privé.

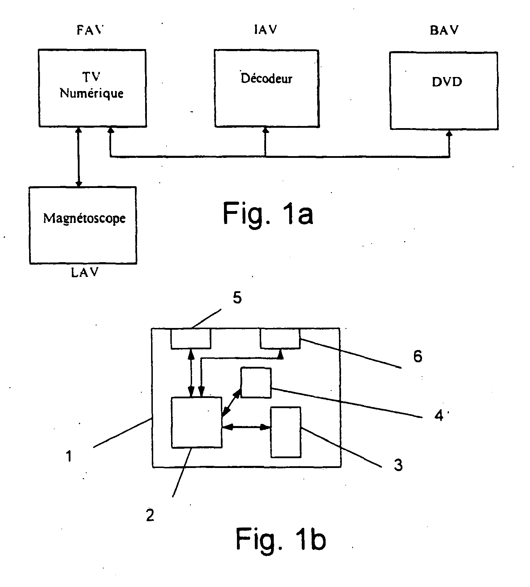

La figure 1a représente un exemple de réseau sous la forme de quatre appareils, FAV, IAV, BAV et LAV. Les appareils FAV, IAV et BAV sont connectés à un même bus, tandis que l'appareil LAV est connecté directement à l'appareil FAV et contrôlé par un module de contrôle présent dans ce dernier. L'appareil BAV est contrôlé, par exemple, par l'intermédiaire de l'appareil IAV.

La figure 1b représente schématiquement l'appareil FAV 1. Il comporte un microprocesseur 2 relié à une mémoire vive 3 et une mémoire morte au moins partiellement reprogrammable 4, ainsi qu'une interface pour bus IEEE 1394 (référence 5) constituée d'un circuit liaison ('Link circuit' en langue anglaise) et d'un circuit physique ('PHY' selon la terminologie IEEE 1394). L'appareil 1 comporte également une interface spécifique 6 pour le branchement du magnétoscope LAV.

Notamment quatre types de modules logiciels peuvent être présents dans la mémoire des appareils du présent réseau. Il s'agit des modules de contrôle d'appareils DCM, d'applications, de modules de service et d'un gestionnaire de transmission de messages.

Les modules de contrôle d'appareils DCM permettent le contrôle d'un appareil ou d'un sous-ensemble de cet appareil. Le module de contrôle peut être localisé dans l'appareil à contrôler lui-même (s'il s'agit d'un appareil de type IAV ou FAV) ou dans un autre appareil que l'appareil à contrôler (si l'appareil à contrôler est de type LAV ou BAV, le gestionnaire de contrôle sera localisé dans un appareil de type IAV ou FAV, ce dernier servant de plate-forme d'exécution). Un gestionnaire de contrôle est soit présent dès l'origine, soit peut être téléchargé. Dans ce dernier cas, le téléchargement est réalisé par exemple au moment de l'initialisation de l'appareil, ou sur requête d'une application.
Les modules de contrôle de fonctions (appelés FCM) sont des modules logiciels permettant le contrôle d'une fonction d'un appareil et sont inclus dans les modules de contrôle d'appareil DCM. Un appareil peut à ce titre posséder plusieurs fonctions: enregistrement, syntoniseur, caméra, affichage, mémoire de masse...

Les modules de service offrent des fonctions ou services système. Ils sont accessibles soit par des modules logiciels locaux, soit à travers le système de transmission de messages à des modules d'autres appareils. Ces fonctions ou services système comportent notamment la gestion graphique d'interfaces utilisateur, la gestion (par exemple le téléchargement) des modules DCM, les procédures de connexion d'un appareil au réseau, l'initialisation du réseau (listage des ressources du réseau), ainsi que le module de registre, qui sera vu plus en détail plus loin.

Chaque module logiciel (DCM ou application ou modules de services système) doit s'enregistrer auprès du module de registre local (c'est à dire le module de registre dans lequel il réside ou dans lequel il a été chargé) s'il veut donner accès à travers la couche message à d'autres modules logiciels du réseau. Les modules de fonction FCM liés à un module de contrôle DCM s'enregistrent également auprès du module de registre local.
Les gestionnaires de transmission de messages se chargent de la communication de messages d'un module logiciel à un autre, quels que soient les appareils dans lesquels ces modules sont localisés. Quand un module logiciel souhaite envoyer un message à un autre module, il ne connaît pas l'appareil physique qui héberge le module destinataire.

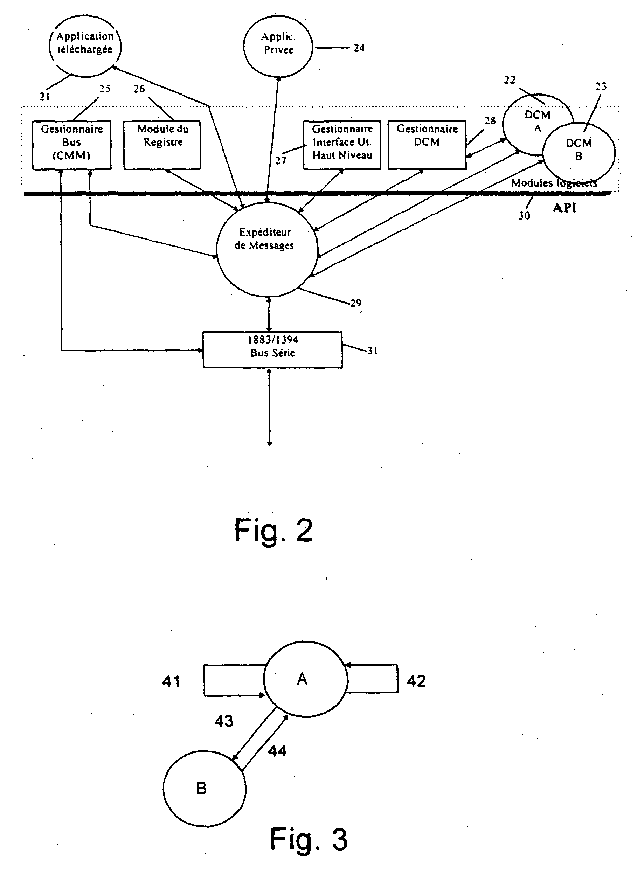

La figure 2 illustre un exemple d'une organisation logicielle d'un appareil de type FAV.
Cet appareil comporte une application téléchargée 21 (par exemple un jeu), deux modules de contrôle DCM A et B 22 et 23, une application privée 24 (par exemple un guide de programmes électronique), un gestionnaire 25 de bus de communication de type IEEE 1883/1394, un module de registre 26, une interface utilisateur haut niveau 27, un gestionnaire 28 de DCM et un système 29 de transmission de messages. Les modules communiquent entre eux par l'intermédiaire du système de transmission de messages accessible au travers d'une interface 30 de programmation d'application (appelée 'API' par la suite). L'appareil comporte également une interface 31 avec le bus 1394.

Lors de son installation dans le réseau, l'appareil FAV cherchera à charger les modules de contrôle DCM d'appareils de type BAV dans le but de les mettre à disposition de ses applications. Dans cette optique, les appareils BAV placent en une zone connue de leur mémoire et dans une structure de données auto-descriptive appelée SDD (SDD signifiant " Self Describing Device " en anglais) le code du module DCM correspondant. L'appareil de type FAV peut ainsi venir lire cet espace mémoire et charger le module DCM de l'appareil de type BAV. Un exemple est celui où l'appareil BAV est une imprimante. Les modules de contrôle DCM ainsi chargés sont enregistrés dans le module du registre de l'appareil FAV et ainsi accessibles par le reste du réseau.
Une structure de données de type SDD est obligatoire dans les appareils de type FAV, IAV ou BAV, et se situe à une adresse fixe dans chaque appareil. Lors de son initialisation, il devient ainsi possible pour un appareil de type FAV d'explorer le réseau pour charger les modules DCM de tous les appareils de type BAV. C'est le gestionnaire de modules DCM de l'appareil FAV qui exécute cette tâche.
Une structure de données SDD comporte également le type d'appareil (FAV, IAV, BAV, LAV).

Le système de transmission de messages d'un appareil comporte :
- le module 26 du registre (déclaration et recherche de modules logiciels),
- une couche message, comprenant l'expéditeur 29 de messages (émission et réception de messages), l'interface 30 de programmation d'application (API) pour permettre l'accès au système de transmission et une sous-couche d'adaptation au bus IEEE 1394.

La sous-couche d'adaptation au bus IEEE 1394 a notamment pour rôle d'adapter la transmission de données au protocole IEEE 1394, en encapsulant les messages à transmettre dans des paquets adaptés à la norme IEEE 1394.

Un message comporte trois composantes : l'adresse du module logiciel de destination, l'adresse du module logiciel source et des données utiles.
Une adresse d'un module logiciel se compose d'un identificateur du noeud sur lequel il s'exécute cet identificateur étant unique au réseau, suivi d'un identificateur de module logiciel unique au noeud dans lequel il s'exécute. L'allocation des identificateurs des modules logiciels est assurée par le système de transmission de messages local à un noeud. Les adresses sont utilisées par l'expéditeur de messages pour l'envoi de messages au module logiciel approprié. Selon le présent exemple de réalisation, une adresse ou identificateur de modules logiciels (référencé 'SEID' dans ce qui suit) est un mot binaire de 80 bits. Il comporte :
- un identificateur d'appareil de 64 bits, mémorisé dans la ROM de l'appareil dans lequel s'exécute le module logiciel. Dans le cas d'un module téléchargé, c'est l'identificateur de l'hôte qui est utilisé. L'identificateur d'appareil est attribué au moment de la fabrication et correspond au champ EUI64 défini dans la norme IEEE 1394 - 1995. Une partie de cet identificateur d'appareil est administrée par l'organisation IEEE et est propre à chaque fabricant, l'autre est choisie par le fabricant de l'appareil lui-même, de façon à ce que chaque appareil fabriqué soit pourvu d'un identificateur différent ;
- un identificateur local constitué par un numéro d'ordre attribué directement par le système de transmission de messages d'un noeud, ce numéro étant codé sur 16 bits et concaténé avec l'identificateur d'appareil pour former l'identificateur SEID. Le système de transmission de messages maintient un compteur en ce sens. Un certain nombre de numéros d'ordre sont réservés (par exemple de 0x0000 à 0x0005) et utilisés pour identifier des modules de service particuliers. Par exemple, le numéro d'ordre 0x0001 correspond systématiquement au module du registre d'un appareil.
Ainsi, chaque module logiciel du réseau comporte un identificateur SEID distinct et unique. Il est cependant possible de définir des identificateurs uniques par des moyens autres que ceux indiqués ci-dessus.

Le module du registre maintient une base de données comportant un répertoire des modules logiciels disponibles localement au niveau de l'appareil. Il met à disposition une interface de programmation rendant accessibles les fonctions d'enregistrement de modules logiciels et de recherche de modules suivant une liste de critères.
Il existe un module du registre dans chaque appareil de type FAV ou IAV. A l'intérieur d'un tel appareil, tous les modules logiciels sont enregistrés par le module du registre local. Si un module logiciel veut pouvoir être contacté, il doit s'enregistrer auprès du module du registre. Le module du registre maintient pour chaque module logiciel qui y est enregistré son adresse dans le réseau et les attributs de ce module.
Selon une variante de réalisation, le module du registre comporte non pas l'adresse du module logiciel, mais son numéro d'ordre.
Les attributs d'un module logiciel permettent de le caractériser. Pour chaque module logiciel, ces attributs sont stockés dans une table, comportant pour chaque attribut la référence de ce dernier sur 32 bits, sa taille en octets, ainsi que sa valeur.
La table 1 donne une liste d'attributs prédéterminés :

**Table 1**

| **Référence d'attribut** | **Format du Type** | **Taille** | **Présence** |
|---|---|---|---|
| Type de module logiciel | entier | 32 bits | M |
| Identificateur HUID | chaîne d'octets | 80 bits | M* |
| Type d'appareil | entier | 32 bits | M* |
| Interface graphique | entier | 32 bits | ○ |
| Format de support | champ de bits | 32 bits | ○ |
| Format de données | champ de bits | 32 bits | ○ |
| Fabricant d'appareil | chaîne de caractères | 15 octets | M* |
| Fabricant de module logiciel | chaîne de caractères | 15 octets | ○ |
| Version de module logiciel | chaîne de caractères | 15 octets | ○ |
| Langage de commande audio-vidéo | champ de bits | 32 bits | ○ |

Le type de module logiciel représente la fonction première du module. Si le module logiciel est un module de service système, alors le type de l'attribut désigne le service système lui-même. Le module du registre est un tel module de service. Si le module logiciel est un gestionnaire de contrôle de fonction FCM, le type définit la fonction: enregistreur, affichage, syntoniseur... Si le module logiciel est un gestionnaire de contrôle d'appareil DCM, le type est 'DCM'. Si le module logiciel possède une interface de programmation par application ('API') non compatible avec le reste du réseau, alors le type est 'Privé'.
L'identificateur 'HUID' est un identificateur d'un l'appareil auquel est associé un gestionnaire DCM ou d'une fonction à laquelle est associée un gestionnaire FCM.
Le type d'appareil associé au module logiciel est FAV, IAV, BAV ou LAV, comme déjà expliqué.

Un gestionnaire DCM peut être associé à une interface utilisateur graphique. L'attribut 'Interface graphique' indique si c'est le cas, et le cas échéant quel est le degré de compatibilité de l'interface du gestionnaire DCM avec les différents niveaux d'interfaces prévus dans le réseau.
L'attribut 'Format de support' indique le type de support de stockage de données qui est supporté par un appareil. Il s'agit par exemple de supports DVD, DAT, DVHS, DVC.
L'attribut 'Format de données' indique le format de données manipulables par un appareil. Il s'agit par exemple de formats MPEG2, JPEG, MIDI, ASCII.
Les attributs 'Fabricant d'appareil' et (Fabricant de modules logiciels') indiquent une référence respectivement du fabricant de l'appareil ou du module logiciel, tandis que l'attribut 'Version de module logiciel' indique le numéro de version d'un module.
En dernier lieu, l'attribut 'Langage de commande audio/vidéo' indique les types des langages propres au module logiciel, en plus du langage de commande HAVI commun déjà évoqué. La valeur de l'attribut est un champ de bits de 32 bits, la valeur de chaque bit indiquant la compatibilité avec un langage de commande spécifique, par exemple CAL ou AV/C.

La base de données d'un module de registre peut, selon une variante de réalisation, également comporter des attributs spécifiques ou 'privés'.

Il est à noter que les modules des registres de différents appareils sont distincts. Il n'y a pas de registre centralisé, dans lequel tous les modules logiciels seraient répertoriés. Les modules logiciels ne sont enregistrés qu'au niveau d'un seul registre: leur registre local. Il n'y a donc pas d'enregistrement double auprès de plusieurs registres.

Selon le présent exemple de réalisation, l'interface de programmation par une application d'un module du registre comporte cinq commandes, qui seront détaillées ci-dessous :
(a) Enregistrement d'un module logiciel
   Cette commande est utilisée pour ajouter un module logiciel dans la base de données du registre local, ou pour modifier les attributs d'un module logiciel déjà enregistré. Elle est utilisée notamment par un module logiciel pour s'enregistrer au moment du branchement de l'appareil comportant cet élément.
   Le module logiciel transmet son identificateur SEID et les attributs au module du registre. Si cet identificateur est déjà présent, les nouveaux attributs remplacent les anciens. Sinon, une nouvelle entrée est créée dans la base de données locale (registre local). Le module du registre transmet un message d'état au module logiciel, suivant le résultat de l'inscription: confirmation de l'inscription ou message d'erreur.
(b) Extraction d'un module logiciel
   Cette commande est utilisée pour lire les attributs d'un module logiciel, connaissant son identificateur SEID. Un pointeur vers une zone de la mémoire vive de l'appareil vers laquelle les données doivent être copiées est transmis avec la requête d'extraction. Si le module logiciel n'est pas présent dans la base de données locale, alors le pointeur est mis à zéro et renvoyé par le module du registre.
   Le module du registre renvoie également un message d'état, qui confirme la copie des attributs, ou indique que l'identificateur recherché n'est pas présent.
(c) Effacer un module logiciel du registre
   Cette commande est utilisée pour éliminer un module logiciel de la base de données locale. Son identificateur SEID est fourni en tant que paramètre de la commande. Le module du registre renvoie un message d'état confirmant la suppression ou indiquant que le module logiciel correspondant n'a pas été trouvé.
(d) Requête de liste de modules logiciels ('Requête simple')
   Cette commande permet de déterminer les identificateurs de modules logiciels enregistrés dans l'ensemble des registres locaux et répondant à certains critères. Selon le présent exemple de réalisation, ces critères sont la référence d'un attribut et la valeur d'un attribut. Un paramètre de la commande est également un opérateur indiquant la façon dont la comparaison entre la valeur de l'attribut spécifié dans la commande et les valeurs de la base doit se faire (égal, plus grand, plus grand ou égal, plus petit, plus petit ou égal, différent, 'ET' logique bit à bit, 'OU' logique bit à bit, ...).
   Le module du registre renvoie le cas échéant la liste des identificateurs SEID des modules logiciels correspondants. Il renvoie également un message d'état indiquant le succès de l'opération (que des identificateurs aient été trouvés ou non), ou son échec.
(e) Effectuer une opération booléenne entre deux listes de modules logiciels ('Requête multiple')

Cette commande est utilisée pour effectuer une opération booléenne sur deux listes d'identificateurs. La commande comporte en tant que paramètres les requêtes correspondant à chaque liste. Une requête peut être constituée par les critères déjà évoqués au paragraphe (d) (requête simple), ou par une autre requête multiple.
Un paramètre de cette commande est également l'opérateur booléen à considérer ('ET' ou 'OU' dans le cadre du présent exemple de réalisation).
Le module du registre renvoie le cas échéant la liste des identificateurs SEID, ainsi qu'un message d'état information du succès de l'opération ou de son échec, pour une raison quelconque, comme par exemple le manque de ressources.

Pour accéder à d'autres modules logiciels, un module logiciel doit connaître l'identificateur SEID de ses correspondants. Pour ce qui est des modules logiciels enregistrés dans le même module du registre, ceci n'est pas un problème, les requêtes exposées précédemment permettant à chaque module logiciel d'extraire des listes d'identificateurs de la base de données locale.

Un module logiciel accède au module du registre local à travers le système local de transmission de messages. Il peut également accéder à un module de registre distant, et ainsi rapatrier des identificateurs de modules enregistrés auprès d'autres modules de registres. Pour ce faire, chaque module de registre propage une requête qui lui a été transmise localement aux modules des registres de tous les autres appareils. Selon le présent exemple de réalisation, un module de registre distant pour lequel aucune réponse n'est reçue dans un intervalle de temps donné est ignoré.
Chaque module du registre recevant la requête du module du registre initial effectue lui-même la recherche dans sa base de données locale et renvoie le cas échéant séparément les listes d'identificateurs correspondant aux critères de la requête au module du registre initial. Ce dernier transmet alors la liste concaténée de tous les identificateurs reçus au module logiciel ayant lancé la requête. Le module logiciel ayant lancé la requête peut alors communiquer avec les modules logiciels d'autres appareils et utiliser les ressources qui leur correspondent.

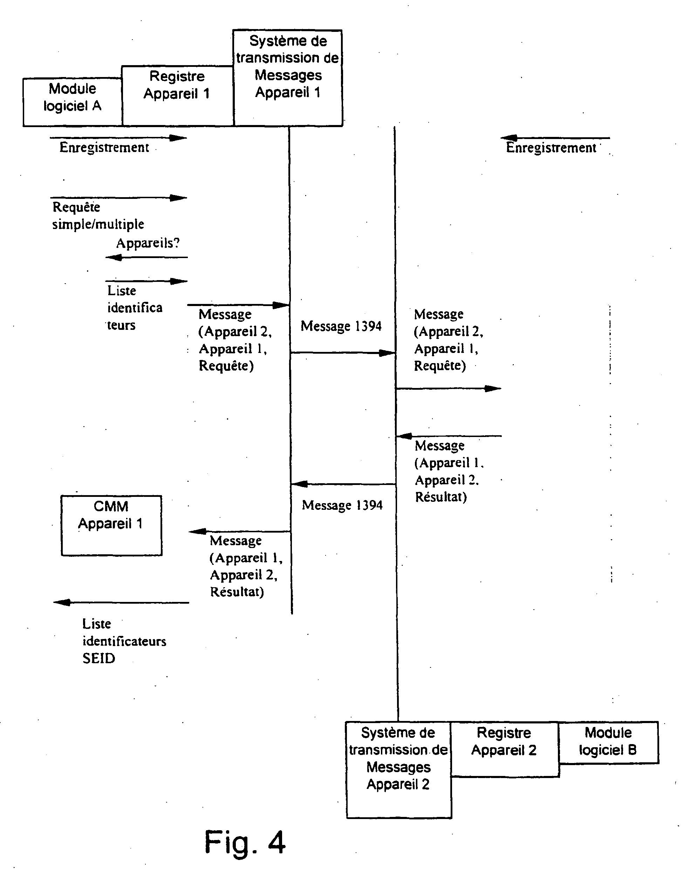

La figure 3 est un diagramme d'état d'un module du registre d'un appareil. Ce diagramme comporte deux états, A et B. L'état A est l'état d'attente d'une requête d'un module logiciel. L'état B est l'état d'attente d'une réponse à une requête lancée auprès des modules de registres distants par le module du registre local.
La table 2 donne les événements déclenchant des actions de la part du module du registre local et les états de départ et d'arrivée correspondants. Les références des événements sont les mêmes que sur la figure 4.

| **Evénement** | **Signification** | **Action** | **Etat de départ** | **Etat d'arrivée** |
|---|---|---|---|---|
| 41 | Enregistrement ou Extraction ou Effacement d'un module logiciel de la base | Déterminer et transmettre réponse | A | A |
| 42 | Requête de liste 'simple' ou 'multiple' reçue de la part d'un module de registre distant | Déterminer et transmettre réponse | A | A |
| 43 | Requête de liste 'simple' ou 'multiple' reçue de la part d'un module logiciel local | Déterminer réponse pour base locale et transmettre requête aux modules de registres distants | A | B |
| 44 | Toutes les réponses ont été reçues. | Déterminer et transmettre réponse finale au module logiciel local | B | A |

La propagation des requêtes est effectuée par le module de registre. Il est rappelé que l'identificateur d'un module de registre est composé d'un identificateur du fabricant (fixé par IEEE), un identificateur de l'appareil (fixé par le fabricant) et d'un identificateur du module de registre, ce dernier étant identique pour tous les modules de registres.
Pour pouvoir propager une requête, le module de registre d'un appareil recense l'ensemble des appareils du réseau, dont il obtient les identificateurs. Il détermine ensuite parmi ces appareils ceux qui comportent également un registre. Dans le présent exemple de réalisation, il s'agit uniquement des appareils de type FAV ou IAV. Connaissant les identificateurs des appareils accessibles par le réseau, le module du registre lit le type de chaque appareil dans la structure de données SDD mentionnée plus haut. Il élimine ainsi les appareils de type BAV. La concaténation de chaque identificateur d'appareil avec l'identificateur local (numéro d'ordre) fixe commun à tous les modules de registres pour obtenir la liste des adresses complètes SEID de tous les modules de registres. Un module de registre obtient la liste des identificateurs d'appareils par l'intermédiaire du module local de gestion de bus (dit 'CMM'), qui surveille la connexion et la déconnexion d'appareils du réseau. Ce module lit la liste de tous les noeuds connectés au réseau dans un registre appelé 'TOPOLOGY_MAP' défini par le document IEEE 1394-1995, paragraphe 8.3.2.4.1. Ce registre se situe dans un appareil gestionnaire du bus (appelé 'Bus Manager' en langue anglaise dans le document IEEE cité ci-dessus) qui maintient à jour le registre relatif à la topologie du réseau. L'adresse de cet appareil est connue par les autres appareils par des moyens également décrits dans le document IEEE.
La figure 4 est un diagramme indiquant le séquencement des messages lorsqu'une requête émise par un module logiciel A d'un premier appareil doit être propagée au module de registre d'un second appareil, un module logiciel B s'étant enregistré dans le registre de ce second appareil.

Selon le mode de réalisation présenté ci-dessus, une requête émise par un module logiciel en vue de déterminer l'ensemble des modules logiciels non locaux est propagée à tous les modules de registres distants. Selon une variante de réalisation, ce type de requête peut également être limité à un groupe de modules de registres distants, par exemple ceux d'un type d'appareil particulier.

## Revendications

1. Procédé de gestion distribuée d'un catalogue d'objets dans un réseau de communication comportant des appareils, ledit procédé comportant l'étape d'enregistrement des identificateurs et attributs d'objets locaux (21-28) présénts dans un appareil (1) dans un registre local (3,4) géré au niveau de cet appareil, ledit procédé étant **caractérisé en ce qu'**il comporte en outre les étapes :
- d'établissement, par un objet local, d'une requête de liste d'objets, ladite requête étant transmise à l'unique registre local de l'appareil hébergeant ledit objet local ;
- de propagation de ladite requête par ledit registre local à des registres distants ;
- de collecte des réponses à ladite requête par les registres distants et de la réponse du registre local ;
- de transmission des réponses collectées à l'objet local ayant établi la requête inltiale ;
- et **en ce qu'**un type de requête établie par un objet est une requête comportant au moins un critère de sélection portant sur un attribut d'objet.

2. Procédé selon la revendication 1, **caractérisé en ce qu'**un registre local comporte pour chaque objet qui y est enregistré un identificateur de cet objet dans le réseau, cet identificateur étant unique pour le réseau, ainsi que des attributs dudit objet.

3. Procédé selon la revendication 2, **caractérisé en ce que** ledit identificateur (SEID) comporte un identificateur de l'appareil dans lequel l'objet est présent, cet identificateur d'appareil étant unique dans le réseau, ainsi que d'un identificateur local unique à cet objet au niveau dudit appareil.

4. Procédé selon la revendication 1, **caractérisé en ce que** la fonction d'un objet est un attribut mémorisé par un registre local pour ledit objet.

5. Procédé selon l'une des revendications précédentes, **caractérisé en ce que** l'étape de propagation d'une requête comporte l'étape de détermination des appareils connectés au réseau comportant eux-mêmes un registre.

6. Procédé selon la revendication 5, **caractérisé en ce que** l'étape de détermination des appareils comprend la détermination des types (FAV, IAV, BAV, LAV) des appareils présents dans le réseau, le type d'un appareil Indiquant s'il héberge un registre ou s'il n'en héberge pas.

7. Procédé selon l'une des revendications précédentes, **caractérisé en qu'**un type de requête établie par un objet est une requête comportant des critères de sélection d'au moins deux listes d'objets, ainsi qu'au moins un opérateur de traitement desdites listes.

8. Appareil (1) dans un réseau de communication comportant des moyens de mémorisation (3, 4) d'objets locaux (21 à 28), des moyens de mémorisation (3) d'un registre local (26) pour contenir un catalogue des objets locaux à l'appareil comportant des identificateurs et attributs desdits objets locaux, des moyens (5, 31) de connexion dudit appareil au réseau, ledit appareil étant **caractérisé en ce qu'**il comporte en outre :
- des moyens (26, 29, 31) de propagation d'une requête de liste d'objets établie par un objet local vers les registres locaux d'autres appareils ;
- des moyens (26) de collecte des réponses des registres des autres appareils et de la réponse du registre local et de transmission desdites réponses à l'objet ayant établi ladite requête ;
- et **en ce qu'**un type de requête établie par un objet est une requête comportant au moins un critère de sélection portant sur un attribut d'objet.

9. Appareil selon la revendication 8, **caractérisé en ce qu'**il comporte en outre des moyens de détermination des adresses d'appareils du réseau comportant des registres dits distants.

## Claims

1. Method for the distributed management of a catalogue of objects in a communication network comprising devices, the method comprising the step of registering identifiers and attributes of local objects (21 - 28) present in a device (1) in a local registry (3, 4) managed at the level of this device, said method being **characterized in that** it furthermore comprises the steps:
- of formulating, by a local object, a request for a list of objects, the request being transmitted to the single local registry of the device hosting said local object;
- of propagating said request through said local registry to distant registries;
- of collecting the responses to said request by the distant registries and the response of the local registry;
- of transmitting the responses collected to the local object having formulated the initial request;
- and **in that** a type of request formulated by an object is a request comprising at least one selection criterion pertaining to an object attribute.

2. Method according to claim 1, **characterized in that** a local registry comprises for each object registered therein an identifier of this object in the network, this identifier being unique for the network, as well as attributes of said object.

3. Method according to claim 2, **characterized in that** said identifier (SEID) comprises an identifier of the device in which the object is present, this device identifier being unique in the network, as well as of a local identifier unique to this object at the level of said device.

4. Method according to claim 1, **characterized in that** the function of an object is an attribute stored by a local registry for said object.

5. Method according to one of the preceding claims, **characterized in that** the step of propagating a request comprises the step of determining the devices connected to the network which themselves comprise a registry.

6. Method according to claim 5, **characterized in that** the step of determining the devices comprises the determination of the types (FAV, IAV, BAV, LAV) of the devices present in the network, the type of a device indicating whether it hosts a registry or whether it does not host one.

7. Method according to one of the preceding claims, **characterized in that** a type of request formulated by an object is a request comprising selection criteria for at least two lists of objects, as well as at least one operator for processing said lists.

8. Device (1) in a communication network comprising means (3, 4) for storing local objects (21 to 28), means (3) for storing a local registry (26) for containing a catalogue of objects local to the device, comprising identifiers and attributes of said local objects, means (5, 31) for connecting said device to the network, said device being **characterized in that** it furthermore comprises:
- means (26, 29, 31) for propagating a request for a list of objects formulated by a local object to the local registries of other devices;
- means (26) for collecting the responses of the registries of the other devices and the response of the local registry and for transmitting the responses to the object having formulated the request;
- and **in that** a type of request formulated by an object is a request comprising at least one selection criterion pertaining to an object attribute.

9. Device according to claim 8, **characterized in that** it furthermore comprises means for determining the addresses of devices of the network comprising so-called distant registries.

## Patentansprüche

1. Verfahren zur verteilten Verwaltung eines Objektkatalogs in einem Kommunikationsnetzwerk mit Geräten, wobei das Verfahren den Schritt der Speicherung der Kennungen und Attribute von in einem Gerät (1) vorhandenen lokalen Objekten (21-28) in einem lokalen, an diesem Gerät verwalteten Register (3, 4), wobei das Verfahren **dadurch gekennzeichnet ist, dass** es ferner die folgenden Schritte umfasst:
- Erstellen einer Anforderung einer Objektliste durch ein lokales Objekt, wobei die Anforderung an das einzige lokale Register des Geräts übertragen wird, das das lokale Objekt hostet;
- Ausbreiten der Anforderung durch das lokale Register zu entfernten Registern;
- Sammeln der Antworten auf die Anforderung durch die entfernten Register und der Antwort des lokalen Registers;
- Übertragung der gesammelten Antworten an das lokale Objekt, das die ursprüngliche Anforderung erstellt hat, und
- **dadurch**, dass es sich bei einem Typ einer durch ein Objekt erstellten Anforderung um eine Anforderung mit mindestens einem Auswahlkriterium hinsichtlich eines Objektattributs handelt.

2. Verfahren nach Anspruch 1, **dadurch gekennzeichnet, dass** ein lokales Register für jedes darin gespeicherte Objekt eine Kennung dieses Objekts in dem Netzwerk, wobei diese Kennung für das Netzwerk eindeutig ist, sowie Attribute des Objekts umfasst.

3. Verfahren nach Anspruch 2, **dadurch gekennzeichnet, dass** die Kennung (SEID) eine Kennung des Geräts, in dem das Objekt vorhanden ist, wobei diese Gerätekennung in dem Netzwerk eindeutig ist, sowie eine lokale, für dieses Objekt an dem Gerät eindeutige Kennung umfasst.

4. Verfahren nach Anspruch 1, **dadurch gekennzeichnet, dass** die Funktion eines Objekts ein durch ein lokales Register für das Objekt gespeichertes Attribut ist.

5. Verfahren nach einem der vorhergehenden Ansprüche, **dadurch gekennzeichnet, dass** der Schritt der Ausbreitung einer Anforderung den Schritt der Ermittlung der an das Netzwerk angeschlossenen Geräte umfasst, die selbst ein Register aufweisen.

6. Verfahren nach Anspruch 5, **dadurch gekennzeichnet, dass** der Schritt der Ermittlung der Geräte die Ermittlung der Typen (FAV, IAV, BAV, LAV) der in dem Netzwerk vorhandenen Geräte umfasst, wobei der Typ eines Geräts anzeigt, ob es ein Register hostet oder ob es kein Register hostet.

7. Verfahren nach einem der vorhergehenden Ansprüche, **dadurch gekennzeichnet, dass** es sich bei einem Typ einer durch ein Objekt erstellten Anforderung um eine Anforderung handelt, die Kriterien zur Auswahl von mindestens zwei Objektlisten sowie mindestens einen Operator zur Bearbeitung der Listen umfasst.

8. Gerät (1) in einem Kommunikationsnetzwerk mit Mitteln zum Speichern (3, 4) von lokalen Objekten (21 bis 28), Mitteln zum Speichern (3) eines lokalen Registers (26), um einen Katalog der lokalen Objekte in dem Gerät mit Kennungen und Attributen der lokalen Objekte zu enthalten, Mitteln (5, 31) zum Anschließen des Geräts an das Netzwerk, wobei das Gerät **dadurch gekennzeichnet ist, dass** es ferner Folgendes umfasst:
- Mittel (26, 29, 31) zur Ausbreitung einer Anforderung einer Objektliste, die durch ein lokales Objekt erstellt wird, zu den lokalen Registern anderer Geräte;
- Mittel (26) zum Sammeln der Antworten der Register der anderen Geräte und der Antwort des lokalen Registers und zum Übertragen der Antworten an das Objekt, das die Anforderung erstellt hat, und
- **dadurch**, dass es sich bei einem Typ einer durch ein Objekt erstellten Anforderung um eine Anforderung mit mindestens einem Auswahlkriterium hinsichtlich eines Objektattributs handelt.

9. Gerät nach Anspruch 8, **dadurch gekennzeichnet, dass** es ferner Mittel zur Ermittlung der Adressen von Geräten des Netzwerks umfasst, die so genannte entfernte Register umfassen.
